# EUROPEAN PATENT SPECIFICATION

(11) **EP 2 022 593 B1**
(45) Date of publication and mention of the grant of the patent: **13.01.2016**
(21) Application number: 08160837.4
(22) Date of filing: 21.07.2008
(51) Int. Cl.: B23K 9/16, B23K 9/32, B08B 15/02, B25J 21/02, B23K 101/00

(54) **Method of and apparatus for welding an article with an enclosure containing a heating device and a welding device**
Verfahren und Vorrichtung zum Schweißen eines Artikels mit einer eine Hitz- und eine Schweisseinrichtung umfassenden Kammer
Procédé et appareil de soudure d'un article avec une enceinte contenant un dispositif de chauffage et un dispositif de soudage

(30) Priority: 26.07.2007 US 828702
(43) Date of publication of application: 11.02.2009
(73) Proprietor: GENERAL ELECTRIC COMPANY, Schenectady, NY 12345 (US)
(72) Inventor: Arnett, Michael Douglas, Simpsonville, SC 29681 (US); Nowak, Daniel, Greenville, SC 29607 (US)
(74) Representative: Illingworth-Law, William Illingworth

(56) References cited:
- EP-A- 0 196 346
- RU-C2- 2 294 821
- US-A- 6 084 196
- US-A1- 2002 005 394
- US-B1- 7 129 436

## Description

The disclosure relates generally to a method and apparatus for welding, and more particularly to a method of and apparatus for welding an article according to the preamble of claims 1 and 7 (see, for example, US 6 084 196 A).

### BACKGROUND OF THE INVENTION

Nickel, cobalt, and iron based superalloys high in aluminum and titanium content have a strong tendency to crack when welded, particularly when filler wire of similar chemistry is used. In order to overcome this tendency, repairs (via welding) on superalloy parts have been performed by locally pre-heating the area to be repaired to extremely high temperatures (often greater than 1500 degrees F) in an inert gas atmosphere. This local pre-heating method has been effective when used prior to and during a welding of parts with non-complex geometries, such as the rotating hot gas path parts of industrial gas turbines.

Historically, parts with complex geometries, such as the turbine nozzles used in industrial gas turbines, have been made from more readily weldable alloys than the superalloys referred to above. Theses more readily weldable alloys allowed the complex geometric parts to receive significant weld repairs during both manufacture and after engine operation.

Recently, nickel, cobalt, and iron based superalloys have started to be used in hot gas path parts including complex geometries. However, the local pre-heating method discussed above has not been effective when used to heat these parts before and during welding. This is because local pre-heating methods can lead to large thermal gradients in the part. When this local pre-heating is applied, the residual stresses and complex geometries of the parts combine with the large thermal gradients to produce new cracks in the parts before any welding can be performed.

Accordingly, with the higher gamma prime alloys now being used for parts with complex geometries, a new welding methodology would be desirable.

### SUMMARY OF THE INVENTION

Disclosed is a method of welding an article according to claim 1.

Also disclosed is an apparatus for welding an article according to claim 7.

### BRIEF DESCRIPTION OF THE DRAWINGS

The following descriptions should not be considered limiting in any way. With reference to the accompanying drawings, like elements are numbered alike:
Figure 1 is a schematic representation of an apparatus for welding an article;
Figure 2 is a block diagram illustrating a method for welding an article; and
Figure 3 is a schematic representation of the article of Figure 1.

### DETAILED DESCRIPTION OF THE INVENTION

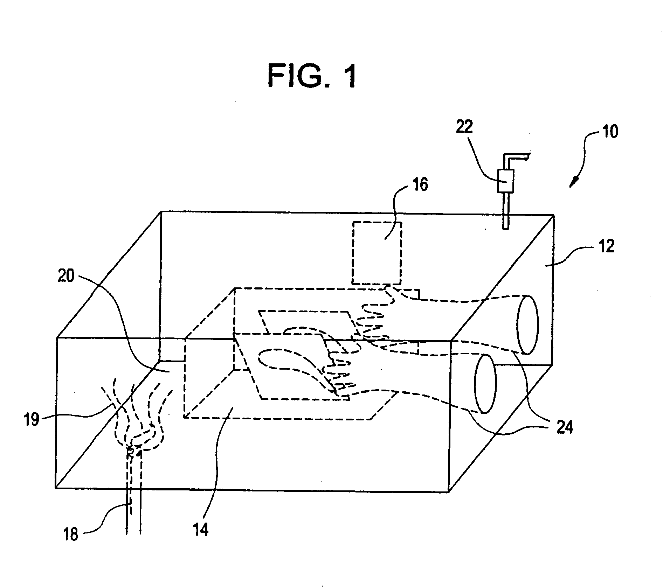

An apparatus 10 for welding a metal article 11 (such as a superalloy metal article) is schematically illustrated in FIG. 1. The apparatus 10 includes an enclosure 12, a heating device 14 that is thermally isolated from the enclosure 12, and a welding device 16. The enclosure 12 includes walls that are configured to seal and enclose the article 11 on all sides. The heating device 14 is sized and configured to uniformly heat the entire article (or at least a substantial entirety of the article 11), and may be an induction heating device, a conductive heating device, or a radiant heating device. In conjunction with the enclosure 12, the welding device 16 is configured for performing a welding operation, such as but not limited to tungsten inert gas (TIG) welding, plasma transferred arc (PTA) welding, or laser welding. The filler metal used by the welding device 16 may be any form of a wire that is appropriate for the operating environment of the article 11. In an exemplary embodiment, the filler metal includes similar properties and chemistry to that of the article 11.

The enclosure 12 also includes a gas inlet 18 through which an inert gas 19 is fed from an exterior of the enclosure 12. Presence of this inert gas 19 within the enclosure 12 creates an inert atmosphere 20 that envelops the article 11 while the article 11 is heated to and maintained at a desired welding temperature. In an exemplary embodiment, the desired welding temperature is at or greater than about 1500 degrees Fahrenheit, and the inert gas used is argon. A one-way flow control valve 22 is shown attached to one wall of the enclosure 12, through which the inert gas 19 and fumes can be exhausted from the enclosure 12 while preventing air from being drawn into the enclosure 12. With the exception of the gas inlet 18 and the one-way flow control valve 22, the enclosure 12 is configured to be sealed off from an ambient environment surrounding the enclosure 12, allowing the article 11 to be sealed within the inert atmosphere during heating and welding.

The apparatus 10 further includes a manipulator 24 for the welding device 16 and article 11. The manipulator 24 may be glove box or pair of gloves comprising a material capable of tolerating the temperatures reached in the enclosure 12. The manipulator 24 is attached to one of the walls of the enclosure 12 so that the article 11 being welded and/or the welding device 16 can be manipulated within the enclosure 12. As a result, with the exception of the one-way valve 22, the enclosure 12 is configured to remain sealed while the article 11 is being heated to or at the welding temperature. Sealing the enclosure 12 in this manner prevents ambient air from being drawn into the enclosure 12 due to severe thermal gradients or other potential causes.

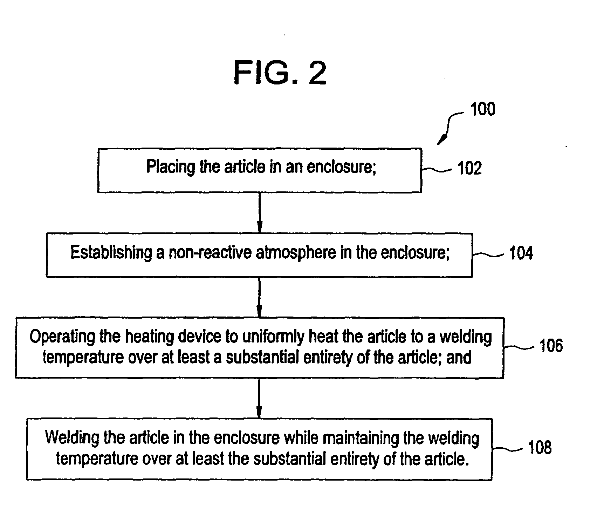

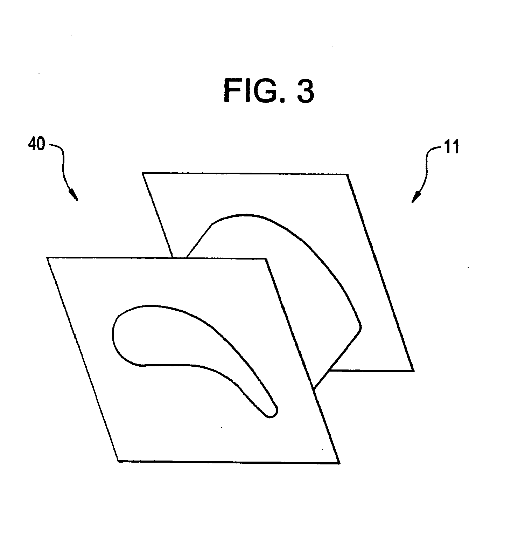

Referring now to Figure 2, an exemplary method 100 for welding a article will be described with reference to the numbered elements introduced above. The method 100 includes placing an article 11 in an enclosure 12, as is shown in operational block 102. In an exemplary embodiment the article 11 is a turbine nozzle 11 with a complex geometry 40 (such as that shown in Figure 3). For purposes of this disclosure, an article (such as article 11 of Figure 3) with a complex geometry will be generally defined as an article with inconsistent, varying dimensions over at least a portion of the article (i.e., an article including different respective lengths, widths, or heights at different regions of the article).

The method 100 also includes establishing a non-reactive atmosphere 20 in the enclosure 12, as shown in operational block 104. As shown in operational block 106, the method 100 further includes operating the heating device 14 to uniformly heat the article 11 to a welding temperature over at least a substantial entirety of the article 11, wherein the entirety of the article is best shown in Figure 3. This operating occurs without removing the article 11 from the enclosure. Heating the article 11 to the welding temperature without removing the article 11 from the enclosure 12 allows a relaxing of residual stresses present in the article 11 as a result of the severe conditions in which the article 11 operates. In addition, uniformly heating the entirety of the article 11 to the welding temperature eliminates thermal gradients associated with localized heating of the article. Elimination of these gradients further decreases or eliminates cracking in the article 11 caused by the gradients. With this cracking remedied, the method 100 is allowed to proceed to a welding of the article 11, as shown in operational block 108, wherein the welding occurs while maintaining the welding temperature over at least a substantial entirety 44 of the article 11. It should be appreciated that in an exemplary embodiment, the welding temperature is at or greater than 815.56 degrees Celsius (1500 degrees Fahrenheit).

It will be noted that while the method 100 lias been described with reference to components of gas turbine engines (i.e. the turbine nozzle 11 best shown in Figure 3), the method 100 is also applicable to a variety of applications in which an article (particularly an article with a complex geometry) is to be heat treated for welding in a manner that will not degrade the properties of the article.

It will also be noted that while the invention has been described with reference to an exemplary embodiment, it should be understood by those skilled in the art that various changes may be made and equivalents may be substituted for elements thereof without departing from the scope of the invention. In addition, many modifications may be made to adapt a particular situation or substance to the teachings of the invention without departing from the scope thereof. Therefore, it is important that the invention not be limited to the particular embodiment disclosed as the best mode contemplated for carrying out this invention, but that the invention will include all embodiments falling within the scope of the apportioned claims. Moreover, it will be further noted that unless specifically stated any use of the terms first, second, etc. do not denote any order or importance, but rather the terms first, second, etc. are used to distinguish one element from another.

## Claims

1. A method (100) for welding an article (11), the method (100) comprising the steps of:
providing an enclosure (12) with an interior that is sealable from an ambient environment surrounding said enclosure (12);
providing a heating device (14) disposed entirely within said enclosure (12) said heating device (14) including walls for containing at least a substantial entirety of the article (11);
placing the article (11) within said heating device (14) establishing a nonreactive atmosphere (20) in said enclosure (12);
operating said heating device (14) to uniformly heat the article (11) in said enclosure (12) to a welding temperature over at least said substantial entirety of the article (11) via at least one of induction heating, conductive heating and radiant heating; and
**characterised in that** the heating device (14) includes walls being thermally isolated from said enclosure (12), and the method further comprises the step of: welding the article (11) in said heating device (14) while maintaining said welding temperature within said heating device (14) over at least said substantial entirety of the article (11).

2. A method (100) according to claim 1, wherein said welding is performed with a welding device (16) manipulated by a manipulator (24) attached to walls of said enclosure (12).

3. The method (100) according to claim 1 or claim 2, wherein the article (11) is configured for use as a component of a gas turbine engine, said component including a complex geometry (40).

4. The method (100) according to any one of the preceding claims, wherein the article (11) is configured for use as a turbine nozzle of a gas turbine engine.

5. The method (100) according to any one of the preceding claims, wherein said welding temperature is greater than or equal to 815.56 degrees Celsius (1500 degrees Fahrenheit).

6. The method (100) according to any one of the preceding claims, wherein said welding device (16) is at least one of a tungsten inert gas (TIG) welding device and an arc welding device.

7. An apparatus (10) for welding an article (11), the apparatus (10) comprising:
an enclosure (12) having walls for enclosing and sealing an interior thereof;
a heating device (14) disposed within said walls of said enclosure (12), said heating device (14) being thermally isolated from said enclosure (12) during the welding of the articles (4);
**characterised in that**:
said heating device (14) includes walls configured to contain at least a substantial entirety of the article (11) and to heat the article (11) to welding temperature over at least a substantial entirety of the article (11) via at least one of induction heating, conductive heating and radiant heating; and
a welding device (16) disposed within said enclosure (12), said welding device (16) and said heating device (14) being configured to allow a welding of the article (11) while the article (11) is within the heating device (14) and the article (11) is at said welding temperature.

8. The apparatus (10) of claim 7, wherein a glove box (24) is attached to the enclosure, said glove box (24) being configured to allow a user to manipulate said welding device and the article (11) within said enclosure (12).

9. The apparatus (10) according to claim 7 or claim 8, wherein said welding temperature is greater than or equal to 815.56 degrees Celsius (500 degrees Fahrenheit).

10. The apparatus (10) according to any one of claims 7 to 9, wherein said welding device (16) is at least one of a tungsten inert gas (TIG) welding device and an arc welding device.

11. The apparatus (10) according to any one of claims 7 to 9, wherein the article (11) is configured for use as a component of a gas turbine engine, said component including a complex geometry (40).

## Patentansprüche

1. Verfahren (100) zum Schweißen eines Gegenstandes (11), wobei das Verfahren (100) die folgenden Schritte umfasst:
Bereitstellen einer Kammer (12) mit einem Inneren, das von einer umliegenden Umgebung der Kammer (12) abgedichtet werden kann;
Bereitstellen einer Heizvorrichtung (14), die vollständig innerhalb der Kammer (12) angeordnet ist, wobei die Heizvorrichtung (14) Wände enthält, um mindestens eine wesentliche Gesamtheit des Gegenstandes (11) aufzunehmen und zu umfassen;
Anordnen des Gegenstandes (11) innerhalb der Heizvorrichtung (14), die eine nicht-reaktive Atmosphäre (20) in der Kammer (12) aufbaut;
Betreiben der Heizvorrichtung (14), um in der Kammer (12) über mindestens die wesentliche Gesamtheit des Gegenstandes (11) hinweg durch eine Induktionsheizung und/oder konduktive Heizung und/oder Strahlungsheizung den Gegenstand (11) gleichmäßig zu erwärmen; und
**dadurch gekennzeichnet, dass** die Heizvorrichtung (14) Wände enthält, die thermisch von der Kammer (12) isoliert sind, und dass das Verfahren ferner den folgenden Schritt umfasst: Schweißen des Gegenstandes (11) in der Heizvorrichtung, während die Schweißtemperatur innerhalb der Heizvorrichtung (14) über mindestens die wesentliche Gesamtheit des Gegenstandes (11) hinweg aufrechterhalten wird.

2. Verfahren (100) nach Anspruch 1, wobei das Schweißen mit einer Schweißvorrichtung (16), die von einem Manipulator (24), der an den Wänden der Kammer (12) befestigt ist, gehandhabt wird, durchgeführt wird.

3. Verfahren (100) nach Anspruch 1 oder 2, wobei der Gegenstand (11) für eine Verwendung als eine Komponente eines Gasturbinenmotors konfiguriert ist, wobei die Komponente eine komplexe Geometrie (40) enthält.

4. Verfahren (100) nach einem der vorhergehenden Ansprüche, wobei der Gegenstand (11) für eine Verwendung als eine Turbinendüse eines Gasturbinenmotors konfiguriert ist.

5. Verfahren (100) nach einem der vorhergehenden Ansprüche, wobei die Schweißtemperatur gleich oder größer als etwa 815,56 Grad Celsius (1.500 Grad Fahrenheit) ist.

6. Verfahren (100) nach einem der vorhergehenden Ansprüche, wobei die Schweißvorrichtung (16) eine Schweißvorrichtung mit Wolfram-Inertgas-Schweißen (TIG) und/oder eine Lichtbogenschweißvorrichtung ist.

7. Vorrichtung (10) zum Schweißen eines Gegenstandes (11), wobei die Vorrichtung (10) umfasst:
eine Kammer (12) mit Wänden, um das Innere darin einzukapseln und abzudichten;
eine Heizvorrichtung (14), die innerhalb der Wände der Kammer (12) angeordnet ist, wobei die Heizvorrichtung (14) während des Schweißens des Gegenstandes (11) thermisch von der Kammer (12) isoliert ist;
**dadurch gekennzeichnet, dass**:
die Heizvorrichtung (14) Wände enthält, die konfiguriert sind, um mindestens eine wesentliche Gesamtheit des Gegenstandes (11) aufzunehmen und zu umfassen und um den Gegenstand (11) über mindestens eine wesentliche Gesamtheit des Gegenstandes (11) hinweg durch eine Induktionsheizung und/oder eine konduktive Heizung und/oder eine Strahlungsheizung auf eine Schweißtemperatur zu erwärmen; und
eine Schweißvorrichtung (16) innerhalb der Kammer (12) angeordnet ist, wobei die Schweißvorrichtung (16) und die Heizvorrichtung (14) konfiguriert sind, um ein Schweißen des Gegenstandes (11) zu ermöglichen, während der Gegenstand (11) innerhalb der Heizvorrichtung (14) ist und der Gegenstand (11) auf der Schweißtemperatur gehalten wird.

8. Vorrichtung (10) nach Anspruch 7, wobei ein Handschuhfach (24) an der Kammer befestigt ist, wobei das Handschuhfach (24) konfiguriert ist, um einem Anwender zu ermöglichen, die Schweißvorrichtung und den Gegenstand (11) innerhalb der Kammer (12) zu handhaben.

9. Vorrichtung (10) nach Anspruch 7 oder 8, wobei die Schweißtemperatur gleich oder größer als etwa 815,56 Grad Celsius (1.500 Grad Fahrenheit) ist.

10. Vorrichtung (10) nach einem der Ansprüche 7 bis 9, wobei die Schweißvorrichtung (16) eine Schweißvorrichtung mit Wolfram-Inertgas-Schweißen (TIG) und/oder eine Lichtbogenschweißvorrichtung ist.

11. Vorrichtung (10) nach einem der Ansprüche 7 bis 9, wobei der Gegenstand (11) für eine Verwendung als eine Komponente eines Gasturbinenmotors konfiguriert ist, wobei die Komponente eine komplexe Geometrie (40) enthält.

## Revendications

1. Procédé (100) pour souder un article (11), le procédé (100) comprenant les étapes consistant à :
fournir une enceinte (12) avec un intérieur qui peut être scellé par rapport à un environnent ambiant entourant ladite enceinte (12) ;
fournir un dispositif de chauffage (14) disposé intégralement dans ladite enceinte, ledit dispositif de chauffage (14) comprenant des parois pour contenir au moins la presque totalité de l'article (11) ;
placer l'article (11) dans ledit dispositif de chauffage (14) en établissant une atmosphère non réactive (20) dans ladite enceinte (12) ;
faire fonctionner ledit dispositif de chauffage (14) pour chauffer uniformément l'article (11) dans ladite enceinte (12) à une température de soudage sur au moins ladite presque totalité de l'article (11) via au moins l'un ou l'autre d'un chauffage par induction, d'un chauffage par conduction et d'un chauffage par rayonnement ; et
**caractérisé en ce que** le dispositif de chauffage (14) comprend des parois qui sont thermiquement isolées de ladite enceinte (12), le procédé comprenant en outre l'étape de soudage de l'article (11) dans ledit dispositif de chauffage (14) tout en maintenant ladite température de soudage dans ledit dispositif de chauffage (14) sur au moins ladite presque totalité de l'article (11).

2. Procédé (100) selon la revendication 1, dans lequel ledit soudage est effectué avec un dispositif de soudage (16) manipulé par un manipulateur (24) fixé aux parois de ladite enceinte (12).

3. Procédé (100) selon la revendication 1 ou la revendication 2, dans lequel l'article (11) est configuré pour un usage comme composant d'un moteur à turbine à gaz, ledit composant présentant une géométrie complexe (40).

4. Procédé (100) selon l'une quelconque des revendications précédentes, dans lequel l'article (11) est configuré pour un usage comme tuyère de turbine d'un moteur à turbine à gaz.

5. Procédé (100) selon l'une quelconque des revendications précédentes, dans lequel ladite température de soudage est supérieure ou égale à 815,56 degrés Celsius (1500 degrés Fahrenheit).

6. Procédé (100) selon l'une quelconque des revendications précédentes, dans lequel ledit dispositif de soudage (16) est au moins l'un ou l'autre d'un dispositif de soudage en atmosphère inerte avec une électrode de tungstène (TIG) et d'un dispositif de soudage à l'arc.

7. Appareil (10) pour le soudage d'un article (11), l'appareil (10) comprenant :
une enceinte (12) ayant des parois pour enserrer et sceller son intérieur ;
un dispositif de chauffage (14) disposé dans lesdites parois de ladite enceinte (12), ledit dispositif de chauffage (14) étant thermiquement isolé de ladite enceinte (12) au cours du soudage des articles (11) ;
**caractérisé en ce que** :
ledit dispositif de chauffage (14) comprend des parois configurées pour contenir au moins la presque totalité de l'article (11) et chauffer l'article (11) à une température de soudage sur au moins la presque totalité de l'article (11) via au moins l'un ou l'autre d'un chauffage par induction, d'un chauffage par conduction et d'un chauffage par rayonnement ; et
un dispositif de chauffage (16) disposé dans ladite enceinte (12), ledit dispositif de soudage (16) et ledit dispositif de chauffage (14) étant configurés pour permettre un soudage de l'article (11) tandis que l'article (11) se trouve dans le dispositif de chauffage (14) et que l'article (11) est exposé à ladite température de soudage.

8. Appareil (10) selon la revendication 7, dans lequel une boîte à gants (24) est fixée à l'enceinte, ladite boîte à gants (24) étant configurée pour permettre à un utilisateur de manipuler ledit dispositif de soudage et l'article (11) dans ladite enceinte (12).

9. Appareil (10) selon la revendication 7 ou la revendication 8, dans lequel ladite température de soudage est supérieure ou égale à 815,56 degrés Celsius (1500 degrés Fahrenheit).

10. Appareil (10) selon l'une quelconque des revendications 7 à 9, dans lequel ledit dispositif de soudage (16) est au moins l'un ou l'autre d'un dispositif de soudage en atmosphère inerte avec une électrode de tungstène (TIG) et d'un dispositif de soudage à l'arc.

11. Appareil (10) selon l'une quelconque des revendications 7 à 9, dans lequel l'article (11) est configuré pour un usage comme composant d'un moteur à turbine à gaz, ledit composant présentant une géométrie complexe (40).
